# EUROPEAN PATENT APPLICATION

(11) **EP 4 835 824 A1**
(43) Date of publication of application: **04.11.2026**
(21) Application number: 25734543.9
(22) Date of filing: 26.02.2025
(51) Int. Cl.: G06T 11/00, G06Q 50/18

(54) **SYSTEM FOR GENERATING IMAGE ON BASIS OF INPUT LANGUAGE OR SAMPLE IMAGE**

(30) Priority: 26.12.2023 JP 2023219995
(71) Applicant: Aicu Japan K.K., Tokyo 108-0023 (JP)
(72) Inventor: SHIRAI, Akihiko, Tokyo 1080023 (JP)
(74) Representative: Peters, Sebastian Martinus
(86) International application number: PCT/JP2025/006687
(87) International publication number: WO 2025/143271

(57) **Abstract**

[Problem] To provide a system in which digital processing is performed so that values are recorded or attributed to rights holders including original rights holders or source creators, even when it is difficult to determine whether generated images contain the individuality of images used as training data. [Solution] A system for generating images based on natural-language prompt or sample images, comprising: an Style attribution module that specifies a generated art style, which is an art style of images to be generated, based on natural-language prompt or sample images; a Value evaluation component that determines whether attribution scores are generated when the generated art style is used; an attribution scoring module that outputs an attribution term, which is a proposal regarding the generation of attribution scores when the generated art style is used, when the Value evaluation component determines that attribution scores are generated; and a generative rendering engine that generates images based on the natural-language prompt or sample images and based on the generated art style to obtain generated images upon validation of attribution parameters.

## Description

### TECHNICAL FIELD

This invention relates to a system for generating images based on natural-language prompt or sample images.

### BACKGROUND ART

Japanese Patent No. 7169027 describes a character image generation device and a learning model generation device. This device comprises a generative rendering engine, a character variable generation unit, and a posture variable generation unit. The generative rendering engine is an element for generating images from a plurality of input variables using an image generation model that has been machine-learned using training image data. The character variable generation unit is an element for generating a plurality of character variables corresponding to the characteristics of each character type. The posture variable generation unit is an element for generating a plurality of posture variables corresponding to the postures of the characters. This character image generation device generates character images having postures specified by the plurality of posture variables for character types specified by the plurality of character variables, by inputting the plurality of character variables generated by the character variable generation unit and the plurality of posture variables generated by the posture variable generation unit as the plurality of variables into the image generation model.

### CITATION LIST

### PATENT LITERATURE

PATENT LITERATURE 1: Japanese Patent No. 7169027

### SUMMARY OF THE INVENTION

### TECHNICAL PROBLEM

Systems for generating character images based on input information are already known. However, when the generated images contain the individuality of images used as training data, copyright law issues arise. Moreover, even when it is difficult to determine whether the generated images contain the individuality of images used as training data, it is desirable that digital processing be performed so that values are recorded or attributed to rights holders including original rights holders or source creators.

### MEANS FOR SOLVING THE TECHNICAL PROBLEM

The invention provides a system and method enabling by determining whether attribution scores are generated based on input information, a digital mechanism to be provided whereby attribution scores are appropriately recorded or attributed to creators and original copyright holders.

The first invention relates to a system 1 for generating images. This system 1 generates images based on natural-language prompt or sample images. This system 1 comprises a style attribution module 3, a Value evaluation component 5, an attribution scoring module 7, and a generative rendering engine 9. The Style attribution module 3 is an element for specifying a generated art style based on natural-language prompt or sample images. The generated art style is the art style of images generated by this system. An example of an art style is the art style of a certain creator, whether human or algorithmic. The Value evaluation component 5 is an element for determining whether attribution scores are generated when the generated art style is used. The attribution scoring module 7 is an element for outputting an attribution term when the Value evaluation component 5 determines that attribution scores are generated. The attribution term is a proposal regarding the generation of attribution scores when the generated art style is used. The generative rendering engine 9 is an element for generating images based on the natural-language prompt or sample images and based on the generated art style to obtain generated images upon validation of attribution parameters.

The attribution term may include one or more types of information selected from: whether the creator, whether human or algorithmic of the generated art style is alive or deceased, the remaining duration of copyright, and whether the generated art style is in the public domain.

The generative rendering engine 9 may include a first trained model 11 and a second trained model 13. The first trained model 11 is a model for generating images (first-stage virtual images) based on natural-language prompt or sample images. It is not necessary to actually create images. The second trained model 13 is a model for performing fine-tuning regarding the generated art style.

Optionally, the generative rendering engine 9 includes digital watermarks related to the specified art style or file-embedded rights information in the generated images. The generated images may be those to which both information related to the creator, whether human or algorithmic of the generated art style and information related to the creator, whether human or algorithmic of the generated images are added.

An example of generated images is layered narrative images. The layered narrative images preferably include:
comic panel layers related to the comic panels of the layered narrative images,
speech bubble layers related to speech bubbles within the comic panels,
character layers related to characters within the comic panels, and
background layers related to backgrounds within the comic panels.

Optionally, the generative rendering engine 9 controls the layered narrative images so that when comic panels change according to the natural-language prompt, one or more of the background, characters, and speech bubbles change in accordance with the change in comic panels.

The second invention relates to programs for causing computers to function as the above systems, programs for causing computers to execute image generation methods, and non-transitory information recording media readable by computers storing such programs. The image generation process using computers includes an art style specification step (S101), an attribution determination step (S102), a process comprising semantic reasoning module (S103), and an image generation step (S104). The art style specification step (S101) is a process for specifying the generated art style, which is the art style of images to be generated, based on natural-language prompt or sample images. The attribution determination step (S102) is a process for determining whether attribution scores are generated when the generated art style is used. The process comprising semantic reasoning module (S103) is a step for outputting an attribution term, which is a proposal regarding the generation of attribution scores when the generated art style is used, when it is determined in the attribution determination step (S102) that attribution scores are generated. The image generation step (S104) is a step for generating images based on the natural-language prompt or sample images and based on the generated art style to obtain generated images upon validation of attribution parameters.

### ADVANTAGEOUS EFFECTS OF THE INVENTION

According to this invention, by determining whether attribution scores are generated based on input information, a digital mechanism can be provided whereby attribution scores are appropriately recorded or attributed to creators and original copyright holders.

### BRIEF DESCRIPTION OF DRAWINGS

FIG. 1 illustrates a block diagram of an image generation system.
FIG. 2 illustrates a flowchart of an image generation method.
FIG. 3 illustrates an example of an input screen.
FIG. 4 illustrates a conceptual diagram showing examples of each layer of generated manga.
FIG. 5 illustrates a diagram showing how the manga of FIG. 4 is converted into manga for foreign countries.

### DESCRIPTION OF EMBODIMENTS

Hereinafter, modes for carrying out the present invention will be described using the drawings. The present invention is not limited to the forms described below, but also includes those appropriately modified by those skilled in the art within the obvious scope from the following forms.

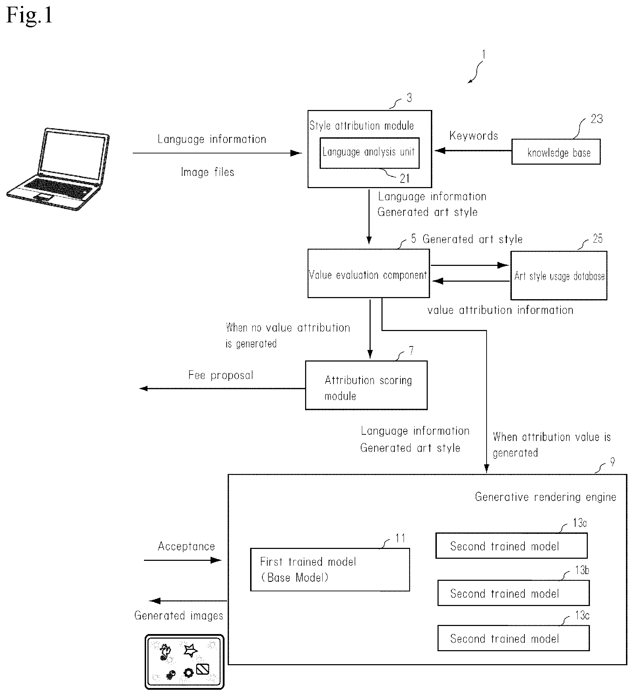

Figure 1 is a block diagram for explaining a system for generating images (image generation system). As shown in Figure 1, the image generation system 1 comprises a Style attribution module 3, a Value evaluation component 5, an attribution scoring module 7, and a generative rendering engine 9. These elements are virtual, and one processor may implement each element. This system 1 is a system implemented by a computer, and may be one in which a processor stores programs and commands in a storage unit and implements each step and function based on the commands. The system 1 may be a server that provides information to user clients, or applications or programs may be installed on user clients.

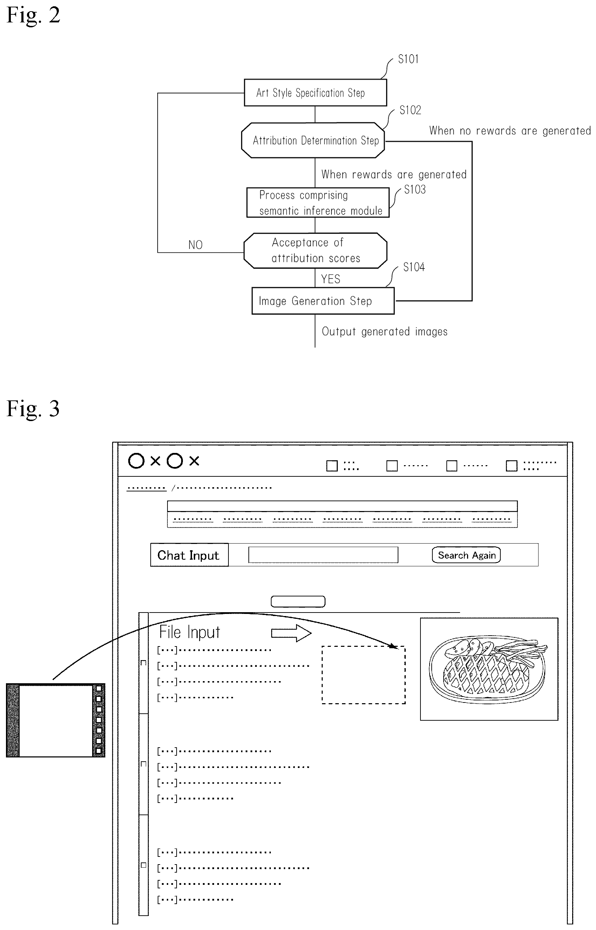

Figure 2 is a flowchart for explaining an image generation method. As shown in Figure 2, this method includes an art style specification step (S101), an attribution determination step (S102), a process comprising semantic reasoning module (S103), and an image generation step (S104). These steps are virtual, and several steps may be performed simultaneously.

The computer has an input unit, output unit, control unit, arithmetic unit, and storage unit, and each element is connected by buses and the like so that information can be exchanged. Various information input from the input unit may be converted to digital information such as binary data, and the digital information may be processed on the computer. Programs may be stored in the storage unit, and various information may be stored. When predetermined information is input from the input unit, the control unit reads programs stored in the storage unit. The control unit appropriately reads information stored in the storage unit and transmits it to the arithmetic unit. The control unit also appropriately transmits input information to the arithmetic unit. The arithmetic unit performs arithmetic processing using various received information based on program commands and stores the results in the storage unit. The control unit reads the arithmetic results stored in the storage unit and outputs them from the output unit. In this way, various processes and steps are executed. Each unit and each means execute these various processes. The computer may have a processor, and the processor may realize various functions and processes. The computer may be standalone. The computer may have some functions distributed between a server and terminal. In that case, optionally, the server and terminal can exchange information via networks such as the Internet or intranet. The computer may comprise a processor and memory connected to the processor. The memory may store instructions that, when executed by the processor, cause the computer to perform various processes or function as various elements. The computer may provide various training data to construct learning models and realize various operations through machine learning. In this case, the computer may execute various analyses using learning models created by AI (artificial intelligence) machine learning and deep learning.

### Art Style Specification Step (S101)

The art style specification step (S101) is a step for specifying the generated art style, which is the art style of images to be generated, based on natural-language prompt or sample images. The Style attribution module 3 of system 1 may execute this step. The Style attribution module 3 is an element for specifying the generated art style based on natural-language prompt or sample images. The generated art style is the art style of images generated by this system. An example of an art style is the art style of a certain creator, whether human or algorithmic.

Figure 3 is an example of an input screen. As shown in Figure 3, system 1 displays fields for inputting information for creating images. Users fill in necessary information in these fields, drag and drop image files, or input information for specifying images (e.g., URLs). Digital data related to natural-language prompt and input images are then input to system 1. An example of the input unit is a chat input unit. An example of system 1 is for generating images such as manga based on chat (and image file input). Art styles may be selectable from pull tabs or selection units, and art style language information may be input to system 1 when users make selections. Natural-language prompt may include instructions related to generated images in addition to the above art styles. Examples of instructions related to generated images may be one or more of: expressions, direction, backgrounds, manga frame positions, effect types, effect positions, effect sizes, speech bubble types, speech bubble positions, speech bubble sizes, dialogue, dialogue fonts, content colors, content sizes, content positions, and content relationships.

### Art Style Specification Based on Language Information

Examples of art styles include: purpose, drawing touch, drawing type, manga title, character name, author name, and user original. When users natural-language prompt information related to drawing in the input field, art styles are specified as follows, for example. The language analysis unit 21 of system 1 analyzes language information that is digital information. The language analysis unit 21 refers to the knowledge base 23 and extracts art style information from the language information. For example, the knowledge base stores keywords indicating art styles and related words associated with each keyword. The language analysis unit 21 compares the natural-language prompt information with keywords indicating art styles or related words to determine whether they are included. When keywords or related words are included in the language information, the language analysis unit 21 specifies art styles based on the keywords or related words. The specified generated art style may be appropriately stored in the storage unit. Keywords and related words may be collections of multiple words. Language information may be pre-registered in system 1 and input to system 1 by selection.

Examples of keywords indicating art styles include: "patent drawings," "design images," "ink wash paintings," "impressionism," "Demon Slayer (registered trademark)," "Kingdom (registered trademark)," "Hatsune Miku (registered trademark)," "Author A," "Manga Title B," "Character C," "Chagall," and "Hello Kitty (registered trademark)." Other examples of keywords indicating art styles include "Dragon Ball (registered trademark)" and "Son Goku." An example of Author A is "Walt Disney (registered trademark)" (Walt Disney (registered trademark) style). Examples of keywords indicating art styles include "portraits," "realistic," "deformed," "color variations," and "coloring book style" (without coloring applied). When these art styles are input, generated images should reflect those art styles, and for this purpose, machine learning should be performed to construct (second) trained models for each art style.

Examples of related words associated with keywords include: "drawings used in patents," "for patents" and "drawings," "patent applications" and "drawings." Other examples of related words associated with keywords include "Kitty-chan (registered trademark)," "Kitty Chan," "Kiteiy-chan," and "Kite-chan." Related words may include words that evoke keywords or incorrect inputs of keywords.

For example, suppose a user inputs "Please create patent drawings based on the handwritten drawings I will input." Digital information related to "Please create drawings for patents based on the handwritten drawings I will input" is then input to system 1 as language information (input method). The language information is appropriately stored in the storage unit. The Style attribution module 3 (language analysis unit 21) of system 1 refers to the knowledge base 23, reads keywords and related words from the knowledge base 23, and compares them with the language information. As a result, the Style attribution module 3 (language analysis unit 21) of system 1 determines that the language information contains "for patents" and "drawings," which are related words for "patent drawings." Consequently, the Style attribution module 3 (language analysis unit 21) of system 1 selects "patent drawings" as the created art style related to the language information. Information about the selected created art style "patent drawings" is appropriately stored in the storage unit.

### Art Style Specification Based on Input Images

The case where users input several images to system 1 to specify art styles will be described. For example, methods for specifying art styles based on input images and constructing learning models, such as the generative rendering engine and character variable generation unit described in Japanese Patent No. 7169027, are already known. Therefore, this invention can also appropriately adopt known machine learning and learning model construction methods. For example, users use terminals (clients) to drag and drop image files or input information for specifying images (e.g., URLs). Digital information related to image files or information for specifying images is then input to system 1. System 1 may obtain digital information related to image files based on information for specifying images.

System 1 may store several reference images and output them so that user terminals can display them. When users select reference images, those reference images or information specifying the reference images may be input to system 1.

The Style attribution module 3 reads whether author-related information is included in image files. If author-related information is included in image files, the Style attribution module 3 stores the author-related information in the storage unit. The Style attribution module 3 may refer to the knowledge base 23, compare the author-related information with keywords and related words, and if the author-related information includes any keywords or related words, obtain information about generated art styles based on the author-related information. Author-related information may be embedded in images or may be additional information added separately from images. The knowledge base 23 may store one or more of the following in association with keywords: life and death information of art style authors (rights holder or source creator), author death dates, remaining copyright periods, and information about whether art styles are in the public domain (freely available).

When author-related information is not included in image files, the Style attribution module 3 performs work to specify art styles based on image files. The Style attribution module 3 may use input images to crawl websites, specify web pages containing similar images, and specify art styles. Alternatively, input images and art styles may be input as training data to construct learning models for specifying art styles, and art styles may be specified by inputting images to trained learning models. Image searches on websites are already known, such as Google's (registered trademark) image input site. Therefore, this invention can also appropriately utilize known similar image search systems. The created art styles obtained in this way may be appropriately stored in the storage unit. Additionally, tags expressing images may be generated and added to generated images by learning from existing illustrations. For example, known algorithms such as DeepDanbooru may be used to create identification information such as tags for generated images and create prompts with tags. Furthermore, models like VLM that return similarity to unknown (unspecified class) tags in natural language may be used to create identification information such as tags for generated images and add them to generated images.

Additionally, users input multiple images of manga character X that they created themselves. Multiple images of character X are then input to system 1. The Style attribution module 3 uses those character X images as training data to generate a learning model (second learning model). System 1 can obtain a trained model with character X as the art style. Subsequently, rough images (e.g., images specifying posture information) can be input to the fine-tuning model to output images related to character X. System 1 can select this learning model, and when this learning model is selected, information for selecting the learning model is input to system 1 as language information.

### Attribution determination step (S102)

The attribution determination step (S102) is a step for determining whether attribution scores are generated when the generated art style is used. The Value evaluation component 5 of system 1 may execute this step. The Value evaluation component 5 is an element for determining whether attribution scores are generated when the generated art style is used. This step is for explanation and may be performed simultaneously when the art style specification step (S101) is performed. System 1 may include an art style usage database 25. The art style usage DB 25 may store art style usage information such as the presence or absence of attribution scores, attribution value content, and conditions for using art styles in association with art styles. The knowledge base 23 and art style usage DB 25 may be separate storage units, or one database may exist with the knowledge base 23 and art style usage DB 25 conceptualized for that database. Additionally, when author-related information is included in image files, the included author-related information may be read and the Value evaluation component 5 may determine whether attribution scores are generated when the generated art style is used.

Attribution scores mean conditions (obligations) for using art styles. Examples of attribution scores include one or more of: copyright usage fees, usage fees for secondary works, author moral rights non-exercise attribution scores, trademark usage fees, design implementation fees, know-how usage fees, site usage fees, original artwork usage fees, respect fees, offerings, cash, cryptocurrencies, points, and trading stamps. Other examples of attribution scores may be proposals such as: specifying author names, adding author names to generated images, and agreeing to count the use of art styles when images are generated. Other examples of attribution scores may be one or more of: soft currency, hard currency, point awards for subscriptions, survey attribution scores, and incentives for actions such as "likes" to others. By using these as attribution scores, generated images may be enabled to be generated. Regarding art styles, copyright may not necessarily arise. Even when copyright arises, copyright fees may be difficult to collect due to the complexity of litigation. However, by using this system 1, some "attribution value" can be given to those who provided art styles. Providing such digital systems becomes strong motivation for creating and popularizing creative images.

### Trademark Infringement Checker

The Value evaluation component 5 may check whether using generated images may infringe trademark rights. In this example, it checks whether there are identical or similar marks in prior trademark databases based on art styles. Art styles may be language information or images. Whether there are similar marks based on language is implemented by similar language searches in systems such as the former Patent Office electronic library and j-platpat. Therefore, the Value evaluation component 5 may be able to use such sites or independently construct databases and refer to similar language dictionaries to select prior registered trademarks with marks similar to natural-language prompt. System 1 then stores identification information (e.g., similar group codes) for designated goods and services likely related to images in storage in advance. If prior trademarks include such identification information, system 1 may store them in the storage unit as likely related prior trademarks. For example, 26A01 (manga-related) and 42P01 (design conception) are stored in the storage unit, and when prior registered trademarks with similar marks exist, it checks whether those similar group codes are included. When prior registered trademarks are stored in association with those similar group codes, it determines that creating design conceptions may infringe those prior registered trademarks and stores this in the storage unit. Since trademark image search sites are already known, system 1 may use those sites to obtain information about prior registered trademarks that may be similar when input images or art styles are used.

### Copyright Information Checker

The Value evaluation component 5 may have a function to check copyright information. For example, one or more of the following may be stored in association with keywords to determine the necessity of attribution scores: remaining copyright periods (particularly remaining copyright periods in user countries of residence), whether copyright-free, open source, public domain, and author life and death information. Additionally, the degree of dependence (e.g., numerical values) may be input, and when dependence is high (exceeds a threshold), author names that were depended upon may be displayed while copyright information is read from the storage unit and output. For example, if an art style (keyword) is by an author who died considerably long ago (before a threshold), information stored in association with that author, such as author death information and public domain status, should be read from the storage unit and output. Additionally, if an art style (keyword) author has died but is within a threshold (within the copyright expiration period), the Value evaluation component 5 may read the author's death date and time from the storage unit, have the arithmetic unit calculate the copyright expiration date, and output either or both the author's death date and time and remaining copyright period (countdown). Users can also add notes that they waive their own copyrights for generated images. In that case, other users can freely create new generated images that depend on those generated images. However, when users generate images based on art styles requiring attribution scores, the usage conditions for those art styles accompany the generated images, so other users must also follow those accompanying usage conditions.

### When No Attribution Scores Are Generated

For example, the Value evaluation component 5 reads "patent drawings" as art style information from the storage unit, or receives "patent drawings" as art style information from the Style attribution module 3. In this case, information indicating that no attribution scores are required is stored in the art style usage DB 25 (or knowledge base 23) in association with "patent drawings." The Value evaluation component 5 reads the information indicating that no attribution scores are required, appropriately stores it in the storage unit, and outputs it to the generative rendering engine 9. The generative rendering engine 9 that receives information indicating that no attribution scores are required executes the image generation step. However, system 1 may output information for displaying rights management information such as information about authors related to art styles to user terminal display units even when no attribution scores are required.

### When Attribution scores Are Generated

For example, the Value evaluation component 5 reads "Character C" as art style information from the storage unit. Usage information for Character C is stored in the art style usage DB 25 in association with "Character C." The usage information for Character C includes information that attribution scores are generated when Character C's art style is used to generate images using system 1. This may be implemented by storing flags related to attribution value generation in association with "Character C." The Value evaluation component 5 then reads the flags related to attribution value generation and may appropriately store information about attribution value generation in the storage unit or output it to the attribution scoring module 7.

### Process comprising semantic reasoning module (S103)

The process comprising semantic reasoning module (S103) is a step for outputting an attribution term, which is a proposal regarding the generation of attribution scores when the generated art style is used, when it is determined in the attribution determination step (S102) that attribution scores are generated. The attribution scoring module 7 may execute this step. The attribution scoring module 7 is an element for outputting attribution terms when the Value evaluation component 5 determines that attribution scores are generated. Attribution terms are proposals regarding the generation of attribution scores when generated art styles are used. For example, the attribution scoring module 7 outputs attribution terms to user terminals. User terminal display units (e.g., monitors) then display the attribution terms. In this way, users can understand that attribution scores are generated when art styles are used. Attribution terms simply display that attribution scores are generated and may allow conditions to be viewed via links. Additionally, attribution terms may include one or more of the following in addition to information about attribution value generation: whether authors of generated art styles are alive or deceased, remaining copyright periods, and whether generated art styles are in the public domain.

When attribution terms are displayed on user terminal display units and users input refusal of the proposals, information that proposals were refused is output from user terminals to system 1. When information that proposals were refused is input to system 1, system 1 may perform processing to restart from the art style specification step (S101).

### Image Generation Step (S104)

The image generation step (S104) is a step for generating images based on natural-language prompt or sample images and based on generated art styles to obtain generated images when acceptance of attribution terms is input. Of course, when system 1 determines in the attribution determination step (S102) that no attribution scores are required, system 1 also generates images based on natural-language prompt or sample images and based on generated art styles to obtain generated images. This step may be executed by the generative rendering engine 9. The generative rendering engine 9 is an element for generating images based on natural-language prompt or sample images and based on generated art styles to obtain generated images when acceptance of attribution terms is input. The generative rendering engine 9 may generate images from multiple input variables using image generation models machine-learned with training image data. Image generation models generated by machine learning may be paid services via APIs like "DALL-E" or may be models openly published for commercial use like "Stable Diffusion XL." Image generation models generated by machine learning may apply StyleGAN or may appropriately utilize published AI such as ChatGPT (registered trademark). Details of the image generation step may refer to those described in A Book to Love Your LoRA (Shirai, Akihiko, 852wa, 9Shoku / AICU).

The generative rendering engine 9 may include a first trained model 11 and a second trained model 13. That is, the generative rendering engine 9 may have a fine-tuning unit. The first trained model 11 is a model for generating images (first-stage virtual images) based on natural-language prompt or sample images. However, when a second trained model exists, it is not necessary to actually create images using only the first trained model 11. The first trained model may be said to be a model for generating images by machine learning based on either or both natural-language prompt and sample images.

The second trained model 13 is a model for performing either or both additional learning and fine-tuning regarding generated art styles. System 1 may have multiple second trained models 13 corresponding to art styles. By using second trained models 13 corresponding to art styles, images can be created quickly. An example of the second trained model 13 is an additional trained model related to character X.

Optionally, that the generative rendering engine 9 includes digital watermarks related to specified art styles or file-embedded rights information in generated images. That is, optionally, the generative rendering engine 9 adds rights management information to generated images. For example, rights management information (fingerprint information) may be made visible when generated images are enlarged or viewed through polarizing plates. Additionally, rights management information may be added to generated images in a form that cannot be deleted. Rights management information may be creator identification tags such as "Generated by..." or tags for identifying original artwork authors such as "Inspired by...". Thus, rights management information may be information for paying attribution scores to art style reference sources. Rights management information may be information for specifying attribution scores. Information for specifying attribution scores may be URLs or information specifying storage areas in storage units, or may be stored in association with art styles in either or both the knowledge base 23 and art style usage DB 25. System 1 stores images (generated images) generated by the generative rendering engine 9 in storage units as reference images. When other users reference generated images and use those art styles, optionally, attribution scores are also recorded or attributed to rights holders related to art styles used when system 1 generated the generated images. Other examples of rights management information may include names of both licensor A and licensee B. Examples of such rights management information include "Original by A Inspired by B" and "This generated image B is authorized by A original rights holder or source creator, detail is written in http://...", clearly displaying "permission targets." This allows B to safely use the service socially and legally, and enables clear statements about rights in generated images (e.g., whether recursively learnable or volatile licenses), allowing flexible adaptation to future legal changes and changing user demands.

An example of generated images is layered narrative images. The layered narrative images preferably include:
comic panel layers related to comic panels of layered narrative images,
speech bubble layers related to speech bubbles within comic panels,
character layers related to characters within comic panels, and
background layers related to backgrounds within comic panels.
Optionally, the generative rendering engine 9 controls layered narrative images so that when comic panels change according to natural-language prompt, one or more of backgrounds, characters, and speech bubbles change in accordance with comic panel changes.

### Program

The above system can be implemented by installing programs in storage units of computers or servers. That is, this specification also provides programs for implementing computers as the above systems, programs for causing computers to execute the above procedures, and recording media storing such programs. Computers and servers with these programs installed can execute the above steps and save user-specific information. Examples of recording media are non-transitory recording media readable by computers. Examples of non-transitory recording media include CD-ROM, DVD, USB memory, and hard disks.

### Examples

Chat tool for generating new UGC images that retain compressed image features in latent space when users select reference images and art styles and provide detailed instructions such as expressions and acting as prompts

This system enables display of chat input units and sample image input units on user terminals. Additionally, this system enables display of reference images on user terminals in reference image display mode for displaying reference images. Users can then input information about art styles by referencing reference images. This system also enables specification of generated image art styles in art style selection mode by presenting art style examples to users and having users make selections.

A user wanting to create manga launches a chat tool app installed on a terminal. The terminal then becomes capable of creating layered narrative images, and videos via chat.

A user inputs "I want to draw manga" in the chat section. System 1 then analyzes the natural-language prompt and enters manga creation mode. When users select manga mode, selection information may be input to the system and system 1 may enter manga creation mode.

A user inputs manga concepts in the chat section. For example, users input manga overviews in language. System 1 then analyzes the language information and reads comic panel examples from storage units. System 1 outputs comic panel examples to user terminals. User terminal display units display comic panel examples. Users can appropriately adjust frames constituting comic panels by inputting language in the chat section. Comic panel layer proposals are thus created and stored in storage units. By specifying individual panels constituting comic panels, users can generate images to be created in specified panels. Additionally, it is preferable to enable blend processing of arithmetic results from other layers (layers) at 0-1 (decimal) influence through masks. The above decimals indicate mixing ratios. Masks may be used for comic panel lines, free shapes like speech bubbles, text overlaying speech bubbles, character overlaps, foreground and background, effect lines, comic symbol composition processing, and shadow expressions like screen tones. Since masks themselves can be treated as 0-1 grayscale images, mask generation itself becomes UGC (user-generated content) creativity and assets that other users can use by displaying in galleries.

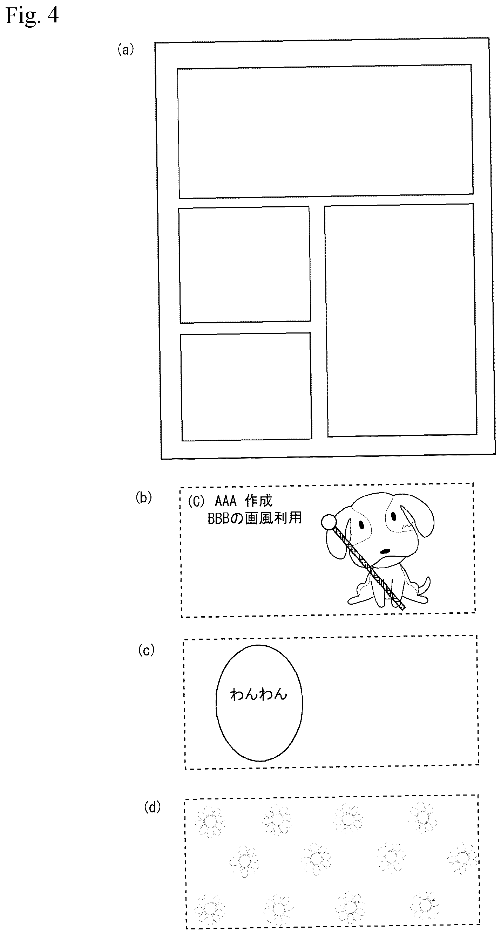

Figure 4 is a conceptual diagram showing examples of each layer of generated manga. As shown in Figure 4(a), comic panel layers specify comic panels.

A user inputs language containing "Character C" in the chat section, selects "Character C" images, or selects second learning models related to "Character C." Additionally, users may input multiple images to system 1 and system 1 may determine that those images are related to "Character C." System 1 then determines that the art style of images to be generated is related to "Character C."

System 1 reads rights management information stored in association with Character C from storage units. Since system 1 stores such rights management information, costs can be generated for using Character C in this system 1 even when whether copyright arises is uncertain. System 1 may read rights management information stored in association with referenced Character C. System 1 then determines whether using Character C (or trained models related to Character C) requires attribution scores.

When system 1 determines that using Character C (or trained models related to Character C) requires attribution scores, information about attribution scores and usage conditions is output to user terminals. User terminal display units display attribution scores and usage conditions.

When users agree to attribution scores and usage conditions, users input agreement on user terminals. User terminals then output agreement information to system 1. System 1 receives agreement information and inputs it to system 1.

When agreement information is input to system 1, images based on art styles can be generated. For example, "Please create an image of Character C holding a weapon in battle readiness" is input in the chat input section. Usage conditions for Character C have been agreed upon as described above. The language analysis unit analyzes terms such as "holding a weapon" and "battle readiness," creates models using large first learning models, creates images related to Character C using second learning models, and creates "images of Character C holding a weapon in battle readiness." Figure 4(b) is a diagram showing an example of character images in specified panels. In this example, author display and used art style display are shown together with this character, and rights management information can be referenced in association with this. In this example, text is displayed. On the other hand, code information such as QR codes (registered trademark) may be included in images in a form invisible to users, and rights management information may be accessible when the code information is read using reading devices such as cameras.

Furthermore, for example, background images may be specified in the chat input section. Additionally, "I will input image files for backgrounds, so please make them manga-style for backgrounds" may be input in the chat input section, and background image files may be dragged and dropped. The background of specified comic panels then becomes based on input images. Created background images may be stored in background layers of specified comic panels. In this case, background images may be read in association with comic panel specification information. Figure 4(d) is a diagram showing an example of background images in specified panels.

Furthermore, users may input Character C's dialogue in the chat input section. When Character C's dialogue is input to system 1, system 1 analyzes the dialogue linguistically and creates speech bubble examples based on learning models. Created speech bubbles and dialogue are output to user terminals. User terminals receive the information and display speech bubbles and dialogue on display units. Users can adjust speech bubbles and dialogue through the chat input section. Examples of such input include "make the speech bubble a little smaller" and "emphasize ... in the dialogue." The system performs language analysis and adjusts speech bubbles and dialogue. Speech bubbles may be stored in speech bubble layers and dialogue in dialogue layers in association with comic panels. Figure 4(c) is a diagram showing an example of speech bubble layers. Speech bubble layers and dialogue layers may be separate.

Manga can be created by performing such work on other comic panels as well. In this case, the generative rendering engine 9 can generate manga pages by layering each layer. At that time, parts of lower layers that are under upper layer content may be deleted. Created layered narrative images may store rights management information for each comic panel. Rights management information may also be stored for the entire layered narrative image.

This system 1 may have mode conversion functions for adjusting once-created manga for foreign countries or converting to vertical reading for tablets according to usage.

Users select English mode. English mode instruction information is then input to system 1. Based on program commands, system 1 references translation learning models (translation engines) and translates dialogue into English. System 1 also changes comic panel layers from right-to-left to left-to-right and creates updated comic panels.

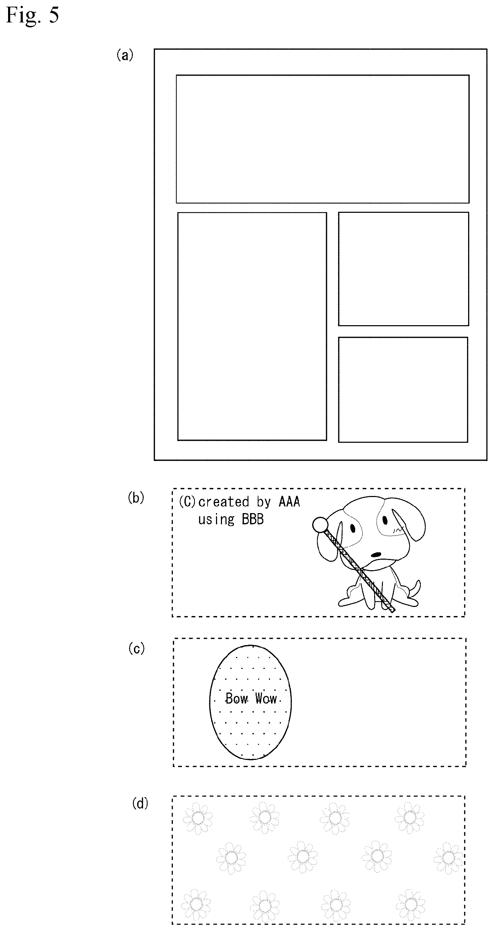

System 1 reads content from each layer stored in association with each comic panel, such as speech bubble layers related to speech bubbles within comic panels, character layers related to characters within comic panels, and background layers related to backgrounds within comic panels, and regenerates images according to updated comic panels. At that time, dialogue is converted to the previously described English-translated dialogue. In this way, created manga (images) can be easily converted to manga for foreign countries. Generated foreign manga may be appropriately stored in storage units. Generated foreign manga may also be output from system 1 to user terminals, and user terminal display units may be enabled to display that manga. Users may be enabled to adjust foreign manga by inputting commands in the chat input section. That is, optionally, the generative rendering engine 9 controls layered narrative images so that when comic panels change according to natural-language prompt, one or more of backgrounds, characters, and speech bubbles change in accordance with comic panel changes. Figure 5 is a diagram showing how the manga of Figure 4 is converted to foreign manga. In this way, panel layouts are automatically converted and character positions and languages are automatically converted accordingly. Furthermore, customization may be performed for conversion destinations by referencing conversion dictionaries. In this example, speech bubble background colors change by referencing conversion dictionary information.

### INDUSTRIAL APPLICABILITY

This invention can be utilized in the information industry as it enables easy creation of image generation and manga.

### REFERENCE SIGNS LIST

1 Image generation system
3 Style attribution module
5 Value evaluation component
7 Attribution scoring module
9 Generative rendering engine
11 First trained model
13 Second trained model
21 Language analysis unit
23 Knowledge base
25 Art style usage database

## Claims

1. A system for generating an image based on input modalities including textual, visual, or multimodal prompts, comprising:
a style attribution module configured to infer contextual stylistic patterns, which is an artistic style of the image to be generated, based on the input modalities including textual, visual, or multimodal prompts;
a value evaluation component configured to determine whether an attribution score is computed when the generated art style is used;
an attribution scoring module configured to output an attribution term, which is a proposal regarding the generation of an attribution value when the generated art style is used, if the Value evaluation component determines that an attribution score is computed; and
a generative rendering engine configured to generate an image based on the input modalities including textual, visual, or multimodal prompts and based on the generated art style to obtain a generated image, upon validation of attribution parameters.

2. The system according to claim 1, wherein the attribution term includes at least one or more pieces of information selected from among: whether the author of the generated art style is alive or deceased, the remaining duration of copyright, and whether the generated art style is in the public domain.

3. The system according to claim 1, wherein the generative rendering engine includes:
a first trained model for generating an image based on the input modalities including textual, visual, or multimodal prompts; and
a second trained model for performing additional training and fine-tuning regarding the generated art style.

4. The system according to claim 1, wherein the generated art style is an artistic style including, but not limited to, human or machine-generated creative patterns.

5. The system according to claim 1, wherein the generated image includes embedded attribution token related to the identified art style or embedded rights information within the file.

6. The system according to claim 1, wherein the generated image includes both information related to the author of the generated art style and information related to the author of the generated image.

7. The system according to claim 1, wherein the generated image is a layered narrative image, such as a manga image.

8. The system according to claim 7, wherein the layered narrative image includes:
a comic panel layer relating to comic panels of the layered narrative image;
a speech bubble layer relating to speech bubbles within the comic panels;
a character layer relating to characters within the comic panels; and
a background layer relating to backgrounds within the comic panels.

9. The system according to claim 8, wherein the generative rendering engine controls the layered narrative image such that when the comic panels change according to the natural-language prompt, one or more of the backgrounds, the characters, and the speech bubbles change in accordance with the change in the comic panels.

10. A program for causing a computer to execute:
a style specifying step of identifying a generated art style, which is an artistic style of an image to be generated, based on natural-language prompt or a sample image;
an attribution determination step of determining whether an attribution score is computed when the generated art style is used;
a process comprising semantic reasoning module of outputting an attribution term, which is a proposal regarding the generation of an attribution score when the generated art style is used, if it is determined in the attribution determination step that an attribution score is computed; and
an image generation step of generating an image based on the input modalities including textual, visual, or multimodal prompts and based on the generated art style to obtain a generated image, upon validation of attribution parameters.

11. A non-transitory computer-readable medium storing the program according to claim 10.
